**Europäisches Patentamt**

**European Patent Office**

**Office européen des brevets**

(19)

(11)     **EP 1 359 453 B1**

(12)     **EUROPÄISCHE PATENTSCHRIFT**

(45) Veröffentlichungstag und Bekanntmachung des Hinweises auf die Patenterteilung:
**09.08.2006  Patentblatt 2006/32**

(51) Int Cl.:
*G02B 21/14* *(2006.01)*

(21) Anmeldenummer: **03002429.3**

(22) Anmeldetag: **05.02.2003**

(54) **Anordnung und Verfahren zum polarisationsoptischen Interferenzkontrast**

Device and method for polarisation interference contrast

Dispositif et méthode de contraste d'interférence de polarisation

(84) Benannte Vertragsstaaten:
**AT BE BG CH CY CZ DE DK EE ES FI FR GB GR HU IE IT LI LU MC NL PT SE SI SK TR**

(30) Priorität: **30.04.2002  DE 10219804**

(43) Veröffentlichungstag der Anmeldung:
**05.11.2003  Patentblatt 2003/45**

(73) Patentinhaber: **CARL ZEISS JENA GmbH**
**07745 Jena (DE)**

(72) Erfinder:
• **Danz, Rainer**
  **37085 Göttingen (DE)**
• **Dietrich, Peter**
  **73447 Oberkochen (DE)**

• **Soell, Alexander**
  **37136 Waake (DE)**
• **Hoyer, Carsten**
  **37127 Jühnde (DE)**
• **Wagener, Michael**
  **37081 Göttingen (DE)**

(74) Vertreter: **Hampe, Holger**
**Carl Zeiss Jena GmbH,**
**Servicebereich Recht und Patente,**
**Patentabteilung**
**07740 Jena (DE)**

(56) Entgegenhaltungen:
**EP-A- 0 634 682          GB-A- 1 282 087**
**US-A- 2 785 601          US-A- 2 924 142**
**US-A- 4 255 014**

**Beschreibung**

Die Erfindung bezieht sich auf eine Anordnung und ein Verfahren zum polarisationsoptischen Interferenzkontrast.

Sie ist insbesondere anwendbar zur kontrastreichen mikroskopischen Darstellung von auf beliebigen (optisch isotropen oder anisotropen) Trägermaterialien aufgebrachten Phasenobjekten wie z. B. Zellkulturen mittels Differentiellen

Interferenzkontrasts (DIC).

Mikroskopisch zu untersuchende Objekte kann man in Amplitudenobjekte und Phasenobjekte unterscheiden. Während Amplitudenobjekte das zur Darstellung verwendete Licht in seiner Helligkeit oder Farbe verändern und so direkt sichtbar gemacht werden können verändern Phasenobjekte lediglich die Phasenlage des

Lichtes, z. B. durch Abweichung in der Brechzahl oder der Dicke von der Umgebung.

Da das menschliche Auge und auch elektronische Bildwandler Veränderungen in der Phasenlage nicht detektieren können, müssen zur Darstellung von Phasenobjekten zusätzliche Maßnahmen getroffen werden, um die Phasenänderungen in

Amplitudenänderungen zu überführen.

Dazu wurden verschieden Verfahren entwickelt, die als Phasenkontrast- und

Interferenzkontrastverfahren unterschieden werden.

Eines der ersten Interferenzkontrastverfahren wurde 1947 von Francis Smith im britischen Patent GB 639 014 vorgeschlagen. Dabei wird je ein Wollastonprisma in der Kondensorbrennebene und in der Objektivbrennebene in den Strahlengang des Mikroskops eingebracht. Im Strahlengang vor dem ersten Wollastonprisma ist ein Polarisator zur Erzeugung linear polarisierten Lichtes angeordnet. Nach dem Durchgang durch das zweite Wollastonprisma wird das Licht mit Hilfe eines zweiten Polarisators analysiert (Analysator). Das beleuchtungsseitige Wollastonprisma hat dabei die Aufgabe, den von dem abbildungsseitigen Wollastonprisma erzeugten

Pupillengangunterschied zu kompensieren, so dass mit voller Beleuchtungsapertur gearbeitet werden kann.

Eine Weiterentwicklung dieses Verfahren wurde 1952 von Georges Nomarski in dem Französischen Patent FR 1 059 123 angegeben. Dabei wird die räumliche Orientierung der Wollastonprismen modifiziert, um Aufspaltung und Wiedervereinigung des ordentlichen und des außerordentlichen Strahls in eine Ebene verlagern zu können, die außerhalb des Prismas liegt und so eine bessere Möglichkeit für die Anordnung der optischen Elemente zu erzielen.

Maximilian Pluta schlug 1963 vor (US-Patent 3 495 890) das abbildungsseitige Wollastonprisma durch zwei hintereinander geschaltete zu ersetzen und somit die Bildaufspaltungsgröße diskret in 3 Schritten ändern zu können..

Auch das erst vor kurzem von Kenichi Kusaka im US-Patent 6 229 644 vorgeschlagene DIC-Mikroskop hat einen analogen Aufbau.

Allen diesen Lösungen ist gemeinsam, dass die Beleuchtung des Objekts mit polarisiertem Licht erfolgen muss. Damit müssen sowohl das Objektiv als auch alle optischen Elemente im Beleuchtungsstrahlengang isotropen Charakter aufweisen. Optische Anisotropien dieser Elemente würden den Bildcharakter des Zwischenbildes erheblich stören. Insbesondere können keine Objektträger aus Kunststoff verwendet werden, da dieser doppelbrechend wirkt. Damit scheiden die für Zellkulturen verwendeten Kunststoff-Petrischalen als Objektträger aus. Zur Untersuchung müssen die Zellkulturen auf herkömmliche Deckgläschen aufgebracht werden, was zusätzliche Präparationszeit und -aufwand erfordert sowie die Untersuchung lebender Kulturen behindert.

Um diese Nachteile zu beseitigen, wird in der DE-OS 100 04 135 vorgeschlagen, spezielle Petrischalen mit definierten optischen Eigenschaften zu verwenden. Diese sind jedoch aufwendig in der Herstellung und Auswahl der verwendbaren Materialien.

Die US 2,785,601 beschreibt eine Anordnung zum polarisationsoptischen Interferenzkontrast nach dem Oberbegriff des Anspruchs 1, welche nur mit speziellen Objektiven nutzbar ist, bei denen zwei 45°-Platten in der hinteren Brennebene angeordnet sind.

Die Erfindung stellt sich daher die Aufgabe, die Nachteile des Standes der Technik zu überwinden und ein polarisationsoptisches Kontrastverfahren anzugeben, bei welchem auch optisch anisotrope Trägermaterialien bzw. restspannungsbehaftete Objektive oder Kondensoren für die zu mikroskopierenden Objekte verwendet werden können.

Erfindungsgemäß wird diese Aufgabe durch eine Anordnung zum polarisationsoptischen Interferenzkontrast nach Anspruch gelöst. Die Beleuchtung des auf dem Objektträger angeordneten Objekts verfolgt mit natürlichem, nicht polarisiertem Licht. Damit spielen Anisotropien (z. B. durch Restspannungen verursachte Doppelbrechungen) von Objektträger oder auch Objektiv bzw. Kondensor keine Rolle. Erst nach dem Durchgang durch das Objektiv wird das Licht linear polarisiert und einem Shearing-Interferometer zugeführt. Ein zweiter Polarisator, welcher als Analysator dient, filtert diejenigen kohärenten Anteile des

Lichts heraus, welche im gleichen Azimut schwingen, so dass ein sichtbares Interferogramm entsteht. Dabei ist es von Vorteil, wenn die Breite des Spaltes einstellbar ist. Besonders vorteilhaft ist es, wenn die Spaltbreite b der Bedingung

$$\frac{bB}{f} < \frac{\lambda}{4} \qquad (1)$$

genügt, wobei B die auf die Objektebene bezogene Shear-Größe, f die Brennweite des Kondensors und λ die Lichtwellenlänge ist. Die Verletzung dieser Bedingung führt zu einer Verschlechterung des Kontrastes

Wenn mit monochromatischem Licht gearbeitet wird, kann der Spalt vorteilhafterweise auch durch mehrere parallele Beleuchtungsspalte ersetzt werden, deren Abstände d die Bedingung

$$\frac{dB}{f} = \lambda \qquad (2)$$

erfüllen sollten. Diese Anordnung der Beleuchtungsspalte kann man auch als Gitter mit einer Gitterkonstante d realisieren.

Als Shearing-Interferometer kann vorteilhafterweise ein Wollastonprisma nach Smith oder Nomarski oder auch ein Interferometer nach Jamin-Lebedeff verwendet werden. Eine günstige Realisierung der Erfindung ergibt sich, wenn mindestens einer der Polarisatoren in seiner Polarisationsrichtung einstellbar ist. Besonders gute Ergebnisse werden erzielt, wenn die Polarisationsrichtungen der beiden Polarisatoren in einem Winkel von 90° zueinander stehen.

Eine weitere vorteilhafte Ausgestaltung der Erfindung besteht darin, dass die Kombination Polarisator - Shearing-Interferometer- Analysator synchron azimutal mit dem Beleuchtungsspalt bzw. den Beleuchtungsspalten des Gitters gedreht werden kann, so dass alle Strukturen im Präparat, die in unterschiedlichen Azimuten liegen und wegen des Azimut-Effektes verschwinden würden, nacheinander kontrastiert werden können. Damit entfällt die sonst notwendige Tischdrehung.

Die Erfindung soll im Folgenden an Hand der Zeichnungen näher erläutert werden.

Es zeigen

Fig. 1: eine schematische Darstellung des Strahlenganges
Fig. 2: schematisch die Größenverhältnisse am Beleuchtungsspalt

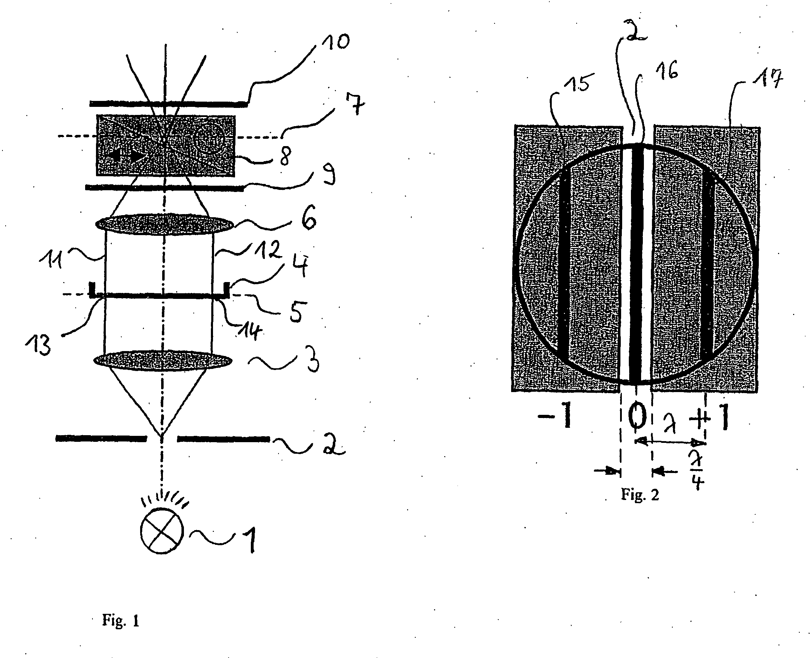

In Fig. 1 wird das Licht einer Lampe 1 über einen Spalt 2 und einen Kondensor 3 auf das in einer Petrischale 4 befindliche Objekt, z. B. eine Zellkultur abgebildet. Die Objektebene 5 wird von einem Objektiv 6 in die Zwischenbildebene 7 abgebildet. Am Ort dieser Zwischenbildebene 7 ist ein Wollastonprisma 8 angeordnet, welches zwischen gekreuzten Polaren 9 und 10 eingebettet ist.

Der ordentliche Strahl 11 und der ausserordentliche Strahl 12 durchdringen das zu untersuchende Objekt an verschiedenen Stellen 13, 14. Der Abstand zwischen den Orten 13 und 14 ist die so genannte Aufspaltung (Shear), welche in der Fig. 1 zur

Veranschaulichung übertrieben groß dargestellt ist.

In Fig. 2 ist schematisch die Rückprojektion der in der Zwischenbildebene 7 entstehenden Interferenzstreifen 15, 16, 17 in die Ebene des Spaltes 2 dargestellt.

Für das erfindungsgemäße Verfahren ist die Breite des Spaltes 2 so zu wählen, dass der wirksame Pupillen-Gangunterschied in Richtung der Spaltbreite kleiner oder gleich einer viertel Wellenlänge bzw. kleiner oder gleich einem Viertel des Interferenzstreifenabstandes in der Pupille ist, wobei vorteilhaft von der nullten Interferenzordnung auszugehen ist.

Unter dieser Bedingung wird der einer sinc-Funktion folgende Feldkontrast nach MICHELSON niemals kleiner als 0,64.

Die mathematische Beschreibung dieses Sachverhalts findet sich in der Formel (1) wieder.

Wird statt weißem Licht monochromatisches Licht verwendet, kann der Beleuchtungsspalt durch eine Vielzahl von Beleuchtungspalten ersetzt werden, wobei die einzelnen Spalte jeweils die Lambda-Viertel-Bedingung erfüllen.

Diese Bedingung wird durch die Formel (2) zum Ausdruck gebracht.

Die Realisierung der Erfindung ist nicht an das dargestellte Ausführungsbeispiel gebunden. Fachmännische Weiterentwicklungen führen nicht zu einem Verlassen des Gebietes der Erfindung.

So kann auch der Spalt bzw. das Gitter zwischen Lichtquelle und Kondensor durch eine anders geformte, z. B. kreisförmige Blende ersetzt werden, was allerdings zur Verschlechterung des Kontrastes führt.

**Patentansprüche**

1. Anordnung zum polarisationsoptischen Interferenzkontrast in einem Mikroskop, bei der eine Lichtquelle (1) vorgesehen ist, welche das Licht der Lichtquelle mittels eines Kondensors (3) auf ein Objekt abbildet, wobei weiterhin ein Objektiv (6) vorgesehen ist, durch welches durch das Objekt hindurchtretendes Licht in eine Objektivaustrittspupille abgebildet wird, wobei dem Objektiv (6) ein erster Polarisator (9) nachgeordnet ist, welcher das vom Objektiv (6) kommende Licht linear polarisiert, wobei nach dem ersten Polarisator in der Nähe der Objektivaustrittspupille ein Shearing-Interferometer (8) angeordnet ist und wobei nach dem Interferometer (8) ein zweiter Polarisator (10) vorgesehen ist, **gekennzeichnet dadurch, dass** zwischen Lichtquelle (1) und Kondensor (3)

   - ein Spalt (2), dessen Breite einstellbar ist, wobei die Breite b des Spaltes der Bedingung

$$\frac{bB}{f} < \frac{\lambda}{4}$$

genügt, wobei B die auf die Objektebene bezogene Shear-Größe, f die Brennweite des Kondensors und λ die Lichtwellenlänge natürlichen Lichtes ist
oder
- ein Gitter, wobei die Gitterkonstante d des Gitters der Formel

$$\frac{dB}{f} = \lambda$$

genügt, wobei B die auf die Objektebene bezogene Shear-Größe, f die Brennweite des Kondensors und λ die Lichtwellenlänge natürlichen Lichtes ist, angeordnet ist.

2. Anordnung zum polarisationsoptischen Interferenzkontrast nach Anspruch 1, **gekennzeichnet dadurch, dass** als Shearing-Interferometer ein Interferometer nach Jamin-Lebedeff oder ein Wollastonprisma nach Smith oder Nomarski vorgesehen ist.

3. Anordnung zum polarisationsoptischen Interferenzkontrast nach Anspruch 1, oder 2, **gekennzeichnet dadurch, dass** die Polarisationsrichtung mindestens eines der Polarisatoren (9,10) einstellbar ist.

4. Anordnung zum polarisationsoptischen Interferenzkontrast nach Anspruch 1, 2 oder 3, **gekennzeichnet dadurch, dass** der erste und der zweite Polarisator (9,10) um 90° zueinander geneigte Polarisationsrichtungen aufweisen.

5. Anordnung zum polarisationsoptischen Interferenzkontrast nach Anspruch 1, 2, 3 oder 4, **gekennzeichnet dadurch, dass** der Spalt (2) um die optische Achse des Kondensors (3) drehbar ist.

6. Anordnung zum polarisationsoptischen Interferenzkontrast nach Anspruch 1, 2, 3, oder 4, **gekennzeichnet dadurch, dass** das Gitter um die optische Achse des Kondensors (3) drehbar ist.

7. Anordnung zum polarisationsoptischen Interferenzkontrast nach Anspruch 5 oder 6, **gekennzeichnet dadurch, dass** eine Einrichtung vorgesehen ist, durch welche die Kombination Polarisator - Shearing-Interferometer- Analysator synchron azimutal mit dem spalt (2) bzw. mit dem Gitter drehbar ist.

8. Mikroskop mit einer Anordnung zum polarisationsoptischen Interferenzkontrast nach einem der vorhergehenden Ansprüche.

**Claims**

1. Arrangement for polarisation-optical interference contrast in a microscope, wherein a light source (1) is provided which projects the light from the light source onto an object by means of a condenser (3), wherein furthermore an objective (6) is provided, wherein light passing through the object is projected through the objective into an objective exit pupil, wherein a first polariser (9) is disposed downstream of the objective (6) and linearly polarises the light emanating from the objective (6), wherein a shearing interferometer (8) is disposed downstream of the first polariser in proximity to the objective exit pupil, and wherein a second polariser (10) is provided downstream of the interferometer (8), **characterised in that** there is disposed between the light source (1) and the condenser (3)

   - a slit (2) whose width can be adjusted, wherein the width b of the slit satisfies the condition

   $$\frac{bB}{f} < \frac{\lambda}{4}$$

   wherein B is the shear size with reference to the object plane, f is the focal length of the condenser and λ is the wavelength of the natural light,
   or

   - a grating, wherein the grating constant d of the grating satisfies the formula

   $$\frac{dB}{f} = \lambda$$

   wherein B is the shear size with reference to the object plane, f is the focal length of the condenser and λ is the wavelength of the natural light.

2. Arrangement for polarisation-optical interference contrast as claimed in Claim 1, **characterised in that** an interferometer in accordance with Jamin-Lebedeff or a Wollaston prism in accordance with Smith or Nomarski is provided as the shearing interferometer.

3. Arrangement for polarisation-optical interference contrast as claimed in Claim 1 or 2, **characterised in that** the polarising direction of at least one of the polarisers (9, 10) can be adjusted.

4. Arrangement for polarisation-optical interference contrast as claimed in Claim 1, 2 or 3, **characterised in that** the polarising directions of the first and the second polarisers (9, 10) are inclined by 90° with respect to each other.

5. Arrangement for polarisation-optical interference contrast as claimed in Claim 1, 2, 3 or 4, **characterised in that** the slit (2) can be rotated about the optical axis of the condenser (3).

6. Arrangement for polarisation-optical interference contrast as claimed in Claim 1, 2, 3 or 4, **characterised in that** the grating can be rotated about the optical axis of the condenser (3).

7. Arrangement for polarisation-optical interference contrast as claimed in Claim 5 or 6, **characterised in that** a device is provided by means of which the polariser/shearing interferometer/analyser combination can be rotated in synchronism azimuthally with the slit (2) or with the grating.

8. Microscope having an arrangement for polarisation-optical interference contrast as claimed in any one of the preceding Claims.


**Revendications**

1. Agencement de contraste d'interférence de polarisation dans un microscope, dans lequel est prévue une source de lumière (1) qui représente la lumière de la source de lumière au moyen d'un condenseur (3) sur un objet, où en outre un objectif (6) est prévu par lequel la lumière traversant l'objet est représentée dans une pupille de sortie d'objectif, où est disposé en aval de l'objectif (6) un premier polariseur (9) qui polarise linéairement la lumière arrivant de l'objectif (6), où est disposé en aval du premier polariseur, au voisinage de la pupille de sortie d'objectif un interféromètre à dédoublement (8) et où est prévu en aval de l'interféromètre (8) un second polariseur (10), **caractérisé en ce qu'**est disposée entre la source de lumière (1) et le condenseur (3)

    - une fente (2), dont la largeur est réglable, où la largeur b de la fente satisfait à la condition

$$\frac{bB}{f} < \frac{\lambda}{4}$$

où B représente la grandeur de dédoublement se rapportant au plan de l'objet, f la largeur focale du condenseur et λ la longueur d'onde de lumière de la lumière naturelle, ou bien,

    - un réseau, où la constante de réseau d du réseau satisfait à la formule

$$\frac{dB}{f} = \lambda$$

où B représente la grandeur de dédoublement se rapportant au plan de l'objet, f la distance focale du condenseur et λ la longueur d'onde de lumière de la lumière naturelle.

2. Agencement de contraste d'interférence de polarisation selon la revendication 1, **caractérisé en ce qu'**il est prévu comme interféromètre à dédoublement un interféromètre selon Jamin-Lebedeff ou un prisme Wollaston selon Smith ou Nomarski.

3. Agencement de contraste d'interférence de polarisation selon la revendication 1 ou 2, **caractérisé en ce que** la direction de polarisation est réglable par au moins l'un des polariseurs (9,10).

4. Agencement de contraste d'interférence de polarisation selon la revendication 1, 2 ou 3, **caractérisé en ce que** le premier et le deuxième polariseur (9, 10) présentent des directions de polarisation inclinées selon 90° l'une vers l'autre.

5. Agencement de contraste d'interférence de polarisation selon la revendication 1, 2, 3 ou 4, **caractérisé en ce que** la fente (2) peut être amenée à tourner autour de l'axe optique du condenseur (3).

6. Agencement de contraste d'interférence de polarisation selon la revendication 1, 2, 3 ou 4, **caractérisé en ce que** le réseau peut être amené à tourner autour de l'axe optique du condenseur (3).

7. Agencement de contraste d'interférence de polarisation selon la revendication 5 ou 6, **caractérisé en ce qu'**une installation est prévue au moyen de laquelle la combinaison formée par le polariseur-l'interféromètre à dédoublement-l'analyseur peut être amenée à tourner d'une manière synchrone, azimutale, avec la fente (2), respectivement le réseau.

8. Microscope avec un agencement de contraste d'interférence de polarisation selon l'une des revendications précédentes.

Fig. 2

Fig. 1